# EUROPÄISCHE PATENTANMELDUNG

(11) **EP 2 824 811 A1**
(43) Veröffentlichungstag der Anmeldung: **14.01.2015**
(21) Anmeldenummer: 13176073.8
(22) Anmeldetag: 11.07.2013
(51) Int. Cl.: H02K 15/06, H02K 3/52

(54) **Durchgehende, auf Spulenträger gewickelte Statorwicklung**

(71) Anmelder: Siemens Aktiengesellschaft, 80333 München (DE)
(72) Erfinder: Eckert, Rainer, 97616 Bad Neustadt / Herschfeld (DE); Pawellek, Jürgen, 97618 Unsleben (DE)

(57) **Zusammenfassung**

An einem Hilfselement (1) werden Spulenträger (2) angeordnet, so dass sie von einer Zentralachse (3) des Hilfselements (1) radial beabstandet sind und tangential dazu gleichmäßig verteilt angeordnet sind. Radial innerhalb der Spulenträger (2) wird an dem Hilfselement (1) ein Schaltungsträger (4) angeordnet. Für die Phasen (a bis c) der Statorwicklung werden Leiterdrähte (5a bis 5c) auf den Phasen (a bis c) zugeordnete Spulenträger (2a bis 2c) gewickelt. Die auf die Spulenträger (2a bis 2c) gewickelten Leiterdrähte (5a bis 5c) bilden dadurch Spulen (6) der Statorwicklung. Die Leiterdrähte (5a bis 5c) werden nach dem Bewickeln jeweils eines Spulenträgers (2a bis 2c) über den Schaltungsträger (4) zum jeweils nächsten zu bewickelnden Spulenträger (2a bis 2c) der jeweiligen Phase (a bis c) geführt. Das Hilfselement (1) wird derart relativ zu einem Stator (7) angeordnet, dass die Zentralachse (3) des Hilfselements (1) mit der Zentralachse (9) des Stators (7) fluchtet. Der Stator (7) weist eine Anzahl von Statorzähnen (10) auf, die, ausgehend von einer in einem radialen Abstand (r') von einer Zentralachse (9) des Stators (7) um diese umlaufenden Verbindungsstruktur (8), nach radial außen ragen. Die mit den Spulen (6) versehenen Spulenträger (2) werden um eine im Bereich des Schaltungsträgers (4) tangential zu den Zentralachsen (3, 9) verlaufende jeweilige Schwenkachse (11) geschwenkt. Dadurch werden die mit den Spulen (6) versehenen Spulenträger (2) von radial außen auf jeweils einen der Statorzähne (10) aufgeschwenkt.

## Beschreibung

Die vorliegende Erfindung betrifft ein Herstellungsverfahren für eine Statorwicklung eines Stators, der eine Anzahl von Statorzähnen aufweist, die, ausgehend von einer in einem radialen Abstand von einer Zentralachse des Stators um die Zentralachse des Stators umlaufenden Verbindungsstruktur, nach radial außen ragen.

Die vorliegende Erfindung betrifft weiterhin einen Stator,
- wobei der Stator eine Anzahl von Statorzähnen aufweist, die, ausgehend von einer in einem radialen Abstand von einer Zentralachse des Stators um die Zentralachse umlaufenden Verbindungsstruktur, nach radial außen ragen,
- wobei auf den Statorzähnen Spulenträger angeordnet sind, so dass die Spulenträger von der Zentralachse des Stators radial beabstandet sind und tangential um die Zentralachse des Stators herum gesehen gleichmäßig um die Zentralachse des Stators herum verteilt angeordnet sind,
- wobei an einem axialen Ende der Spulenträger ein Schaltungsträger angeordnet ist,
- wobei auf die Spulenträger jeweils ein Leiterdraht gewickelt ist, so dass der auf den Spulenträger gewickelte Leiterdraht eine Spule einer Statorwicklung des Stators bildet.

Ein derartiger Stator kann beispielsweise der Stator eines Außenläufers sein. Alternativ kann der Stator das Innenteil eines sogenannten Stern-Joch-Pakets sein. Ein derartiges Stern-Joch-Paket ist aus der EP 2 549 622 A1 bekannt.

Beim Herstellen einer Statorwicklung eines Stators, dessen Statorzähne nach radial außen ragen, werden im Stand der Technik oftmals die Spulenträger einzeln mit einem jeweiligen Leiterdraht bewickelt. Danach werden die Spulenträger auf die Statorzähne aufgesteckt. Im Falle eines als Stern-Joch-Paket ausgebildeten Stators wird sodann das Joch auf den Stern aufgeschoben. Danach werden die sogenannten Phasentrenner eingeschossen, der Schaltungsträger aufgesteckt und innerhalb des Schaltungsträgers die Leiterdrähte der einzeln auf die Spulenträger gewickelten Leiterdrähte miteinander verbunden.

Insbesondere das Verbinden der Leiterdrähte der einzelnen Spulen miteinander ist fertigungstechnisch aufwändig und fehlerträchtig. Falls es manuell vorgenommen wird, ist es darüber hinaus zeitaufwändig und umständlich.

Die Aufgabe der vorliegenden Erfindung besteht darin, Möglichkeiten zu schaffen, einen Stator, der nach außen ragende Statorzähne aufweist, auf einfachere Weise zu schalten.

Die Aufgabe wird durch ein Herstellungsverfahren mit den Merkmalen des Anspruchs 1 gelöst. Vorteilhafte Ausgestaltungen des erfindungsgemäßen Herstellungsverfahrens sind Gegenstand der abhängigen Ansprüche 2 bis 10.

Erfindungsgemäß wird ein Herstellungsverfahren für eine Statorwicklung eines Stators, der eine Anzahl von Statorzähnen aufweist, die, ausgehend von einer in einem radialen Abstand von einer Zentralachse des Stators um die Zentralachse des Stators umlaufenden Verbindungsstruktur, nach radial außen ragen, dadurch ausgestaltet,
- dass an einem Hilfselement Spulenträger angeordnet werden, so dass die Spulenträger von einer Zentralachse des Hilfselements radial beabstandet sind und tangential um die Zentralachse des Hilfselements herum gesehen gleichmäßig um die Zentralachse des Hilfselements herum verteilt angeordnet sind,
- dass an dem Hilfselement radial innerhalb der Spulenträger ein Schaltungsträger angeordnet wird,
- dass für jede Phase der Statorwicklung ein jeweiliger Leiterdraht auf der jeweiligen Phase zugeordnete Spulenträger gewickelt wird, so dass der auf die jeweiligen Spulenträger gewickelte jeweilige Leiterdraht jeweilige Spulen der Statorwicklung bildet,
- dass der jeweilige Leiterdraht nach dem Bewickeln jeweils eines der Spulenträger über den Schaltungsträger zum jeweils nächsten zu bewickelnden Spulenträger der jeweiligen Phase geführt wird und
- dass das Hilfselement derart relativ zum Stator angeordnet wird, dass die Zentralachse des Hilfselements mit der Zentralachse des Stators fluchtet, und sodann die mit den Spulen versehenen Spulenträger um eine im Bereich des Schaltungsträgers tangential zu den Zentralachsen verlaufende jeweilige Schwenkachse geschwenkt werden, so dass die mit den Spulen versehenen Spulenträger von radial außen auf jeweils einen der Statorzähne aufgeschwenkt werden.

Das Aufschwenken kann nach Bedarf ausgebildet sein. Vorzugsweise werden die Spulenträger zum Aufschwenken auf die Statorzähne um mindestens 90° um die jeweilige Schwenkachse verschwenkt. Ab diesem Winkel sind die Spulenträger zum Bewickeln mit dem jeweiligen Leiterdraht gut zugänglich. Insbesondere können sie um 180° um die jeweilige Schwenkachse verschwenkt werden. Diese Ausgestaltung ist besonders kompakt. Weiterhin sind die Spulenträger in diesem Fall in einer ähnlichen Konfiguration wie nach dem Aufschwenken am Hilfselement angeordnet. Weiterhin kann es sich bei der Schwenkbewegung um eine reine Schwenkbewegung handeln, so dass auch der letzte Abschnitt der Bewegung der Spulenträger eine Schwenkbewegung ist. Alternativ kann der jeweilige Spulenträger beim Beenden der Schwenkbewegung unmittelbar vor dem jeweiligen Statorzahn positioniert sein, so dass der letzte Bewegungsabschnitt ein Aufschieben des jeweiligen Spulenträgers auf den jeweiligen Statorzahn ist.

Die Leiterdrähte der Phasen werden im Schaltungsträger vorzugsweise kreuzungsfrei geführt. Hierzu können die Leiterdrähte der Phasen im Schaltungsträger von Phase zu Phase alternativ radial oder axial versetzt geführt werden.

Wenn die Leiterdrähte der Phasen im Schaltungsträger axial versetzt geführt werden, weist der Schaltungsträger pro Phase vorzugsweise jeweils einen Teilträger auf. In diesem Fall wird zunächst einer der Teilträger an dem Hilfselement angeordnet. Der jeweils nächste Teilträger wird erst nach dem Wickeln des Leiterdrahtes zu den Spulen der jeweiligen Phase auf den jeweils vorhergehenden Teilträger aufgesetzt. Diese Vorgehensweise bietet sowohl fertigungstechnische Vorteile als auch Vorteile bezüglich der Einhaltung von aus Sicherheitsgründen einzuhaltenden Kriech- und Luftstrecken. Die Teilträger können untereinander identisch ausgebildet sein.

Es ist möglich, dass keine direkte Verbindung der Spulenträger mit dem Schaltungsträger besteht. Alternativ ist es möglich, dass die Spulenträger jeweils ein Scharnier aufweisen, über das sie jeweils mit dem Schaltungsträger verbunden sind.

In der Regel weisen die Spulenträger jeweils einen ersten und einen zweiten Spulenträgerflansch auf, wobei im auf die Statorzähne aufgeschwenkten Zustand der erste Spulenträgerflansch der Verbindungsstruktur zugewandt und der zweite Spulenträgerflansch von der Verbindungsstruktur abgewandt ist. Vorzugsweise weist der zweite Spulenträgerflansch eine Einführnut zum Einführen des Leiterdrahtes in einen von den Spulenträgerflanschen begrenzten Wickelbereich des jeweiligen Spulenträgers auf, wobei die Einführnut im auf die Statorzähne aufgeschwenkten Zustand nicht rein axial zur Zentralachse des Stators verläuft, sondern zumindest in einem Abschnitt eine Tangentialkomponente aufweist.

In der Regel ist der erste Spulenträgerflansch kleiner als der zweite Spulenträgerflansch.

Wie bereits erwähnt, kann das erfindungsgemäße Herstellungsverfahren bei einem Außenläufermotor angewendet werden. Ihre vollen Vorteile zeigt die vorliegende Erfindung jedoch, wenn sie bei einem als Stern-Joch-Paket ausgebildeten Stator angewendet wird, also nach dem Aufschwenken der mit den Spulen versehenen Spulenträger auf die Statorzähne axial zur Zentralachse des Stators ein Statorjoch auf die Statorzähne aufgeschoben wird.

Die Aufgabe wird weiterhin durch einen Stator mit den Merkmalen des Anspruchs 11 gelöst. Vorteilhafte Ausgestaltungen des erfindungsgemäßen Stators sind Gegenstand der abhängigen Ansprüche 12 bis 18.

Erfindungsgemäß ist ein Stator der eingangs genannten Art dadurch ausgestaltet, dass für jede Phase der Leiterdraht über den Schaltungsträger jeweils von Spulenträger zu Spulenträger der jeweiligen Phase geführt ist.

Die vorteilhaften Ausgestaltungen des Stators korrespondieren im wesentlichen mit denen des Herstellungsverfahrens. Es wird daher auf die obigen Ausführungen verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Hilfselement mit Spulenträgern im Längsschnitt,
- FIG 2: das Hilfselement von FIG 1 in einer Draufsicht,
- FIG 3: Spulenträger und einen Schaltungsträger ohne das Hilfselement von FIG 1 in einer perspektivischen Darstellung,
- FIG 4 und 5: Darstellungen alternativer Hilfselemente,
- FIG 6: das Hilfselement von FIG 1 in Verbindung mit einem Stator im Längsschnitt,
- FIG 7: einen Schnitt längs einer Linie VII-VII in FIG 6,
- FIG 8: das Hilfselement und den Stator von FIG 6 in einer perspektivischen Darstellung,
- FIG 9 und 10: Spulenträger und verschiedene mögliche Ausgestaltungen von Schaltungsträgern,
- FIG 11: eine mögliche Ausgestaltung eines Schaltungsträgers,
- FIG 12: einen Schaltungsträger und Spulenträger,
- FIG 13 und 14: einen Abschnitt je eines einzelnen Spulenträgers und
- FIG 15: einen als Stern-Joch-Paket ausgebildeten Stator.

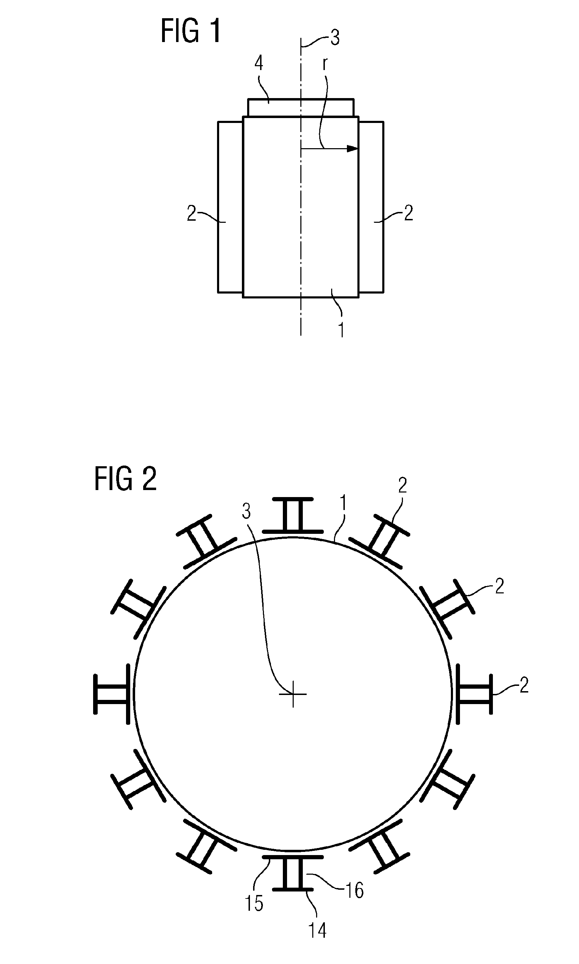

Zum Herstellen einer Statorwicklung werden (= Vorgang; Gegensatz: sind = Zustand) gemäß den FIG 1 bis 3 zunächst an einem Hilfselement 1 Spulenträger 2 angeordnet. Soweit nachfolgend allgemein auf die Spulenträger 2 Bezug genommen wird, wird nachstehend weiterhin das Bezugszeichen 2 verwendet. Die Spulenträger 2 sind jedoch jeweils einer von mehreren elektrischen Phasen a bis c zugeordnet. Soweit es konkret die Spulenträger 2 einer bestimmten Phase betrifft, wird das Bezugszeichen 2 nachstehend mit einem Kleinbuchstaben a bis c ergänzt. Die gleiche Ergänzung wird auch im Zusammenhang mit anderen Elementen verwendet werden, soweit es auf Zuordnung zur jeweiligen Phase a bis c ankommt.

Die Anordnung der Spulenträger 2 an dem Hilfselement 1 erfolgt derart, dass die Spulenträger 2 von einer Zentralachse 3 des Hilfselements 1 einen radialen Abstand r aufweisen, von der Zentralachse 3 des Hilfselements 1 also radial beabstandet sind. Die Anordnung der Spulenträger 2 an dem Hilfselement 1 erfolgt weiterhin derart, dass tangential um die Zentralachse 3 des Hilfselements 1 herum gesehen die Spulenträger 2 gleichmäßig um die Zentralachse 3 des Hilfselements 1 herum verteilt angeordnet sind.

An dem Hilfselement 1 wird (= Vorgang) weiterhin ein Schaltungsträger 4 angeordnet. Die Anordnung des Schaltungsträgers 4 erfolgt derart, dass der Schaltungsträger 4 radial innerhalb der Spulenträger 2 angeordnet ist. Die Anordnung des Schaltungsträgers 4 erfolgt weiterhin derart, dass der äußere Rand des Schaltungsträgers 4 in der Nähe eines der Enden der Spulenträger 2 angeordnet ist.

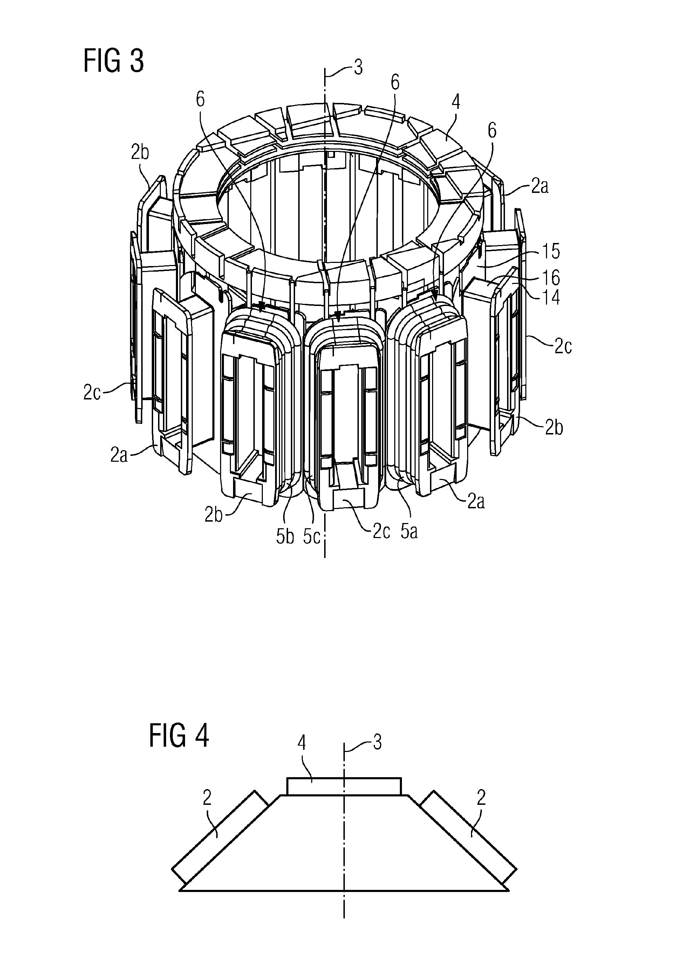

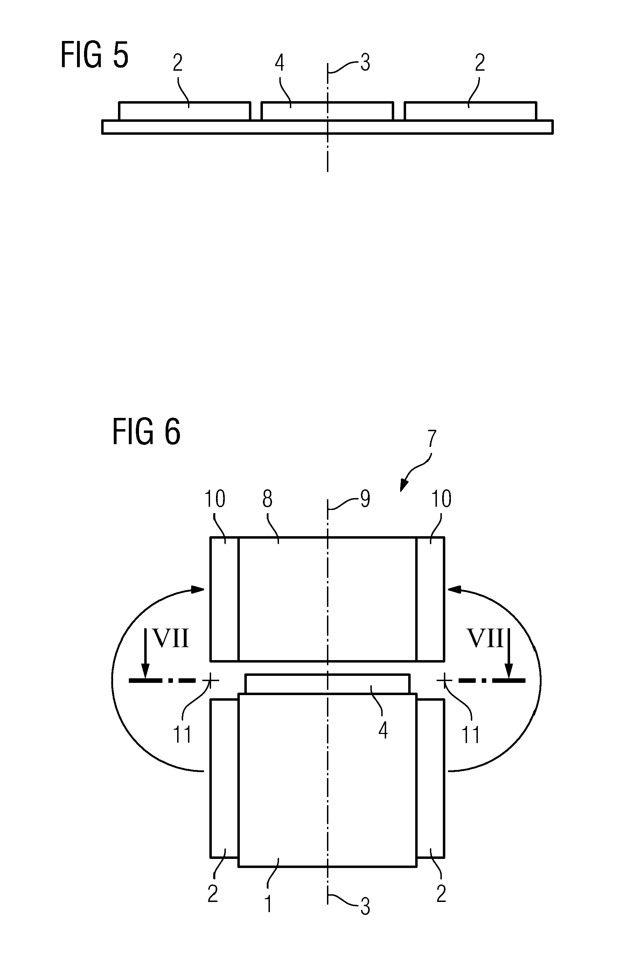

Es ist derzeit bevorzugt, dass das Hilfselement 1 eine im wesentlichen zylindrische Struktur aufweist, so dass die Spulenträger 2 im wesentlichen auf einem Zylindermantel des Hilfselements 1 angeordnet sind. Alternativ kann das Hilfselement 1, wie in den FIG 4 und 5 angedeutet, im wesentlichen die Form eines Kegelstumpfes oder einer Scheibe aufweisen.

Nach dem Anordnen der Spulenträger 2 und des Schaltungsträgers 4 an dem Hilfselement 1 werden die Spulenträger 2 bewickelt. Das Bewickeln der Spulenträger 2 erfolgt separat für jede der Phasen a bis c. Das Verfahren zum Bewickeln der Spulenträger 2 ist für jede Phase a bis c dasselbe. Es wird daher nachfolgend nur für eine der Phasen a bis c näher erläutert.

Zum Bewickeln der Spulenträger 2a der Phase a wird ein Leiterdraht 5a auf einen der Spulenträger 2a der Phase a gewickelt. Das Bewickeln des entsprechenden einzelnen Spulenträgers 2a erfolgt so wie im Stand der Technik auch und bedarf daher keiner näheren Erläuterung. Durch das Wickeln des Leiterdrahtes 5a auf den Spulenträger 2a der Phase a bildet der auf den Spulenträger 2a gewickelte Leiterdraht 5a eine Spule 6 einer Statorwicklung. Sodann wird der Leiterdraht 5a über den Schaltungsträger 4 zum nächsten zu bewickelnden Spulenträger 2a der entsprechenden Phase a geführt.

Dieser Vorgang - also das Bewickeln eines einzelnen Spulenträgers 2a der Phase a mit dem Leiterdraht 5a nebst nachfolgendem Führen des Leiterdrahtes 5a über den Schaltungsträger 4 zum nächsten Spulenträger 2a der entsprechenden Phase a - wird wiederholt, bis alle Spulenträger 2a der entsprechenden Phase a mit dem Leiterdraht 5a bewickelt sind. Der entscheidende Unterschied der erfindungsgemäßen Vorgehensweise zum Stand der Technik besteht somit darin, dass nicht die Spulenträger 2a der Phase a einzeln jeweils mit einem eigenen Leiterdraht bewickelt werden und danach eine Verbindung der Leiterdrähte im Schaltungsträger 4 erfolgt, sondern dass ein einziger, durchgehender Leiterdraht 5a verwendet wird, mittels dessen die Spulenträger 2a der entsprechenden Phase a nacheinander bewickelt werden.

Das Verfahren zum Bewickeln der Spulenträger 2 ist, wie bereits erwähnt, für jede Phase a bis c dasselbe. Es wird daher für die anderen Phasen b und c mit jeweils einem eigenen Leiterdraht 5b und 5c für die jeweiligen Spulenträger 2b und 2c der jeweiligen Phase b und c wiederholt.

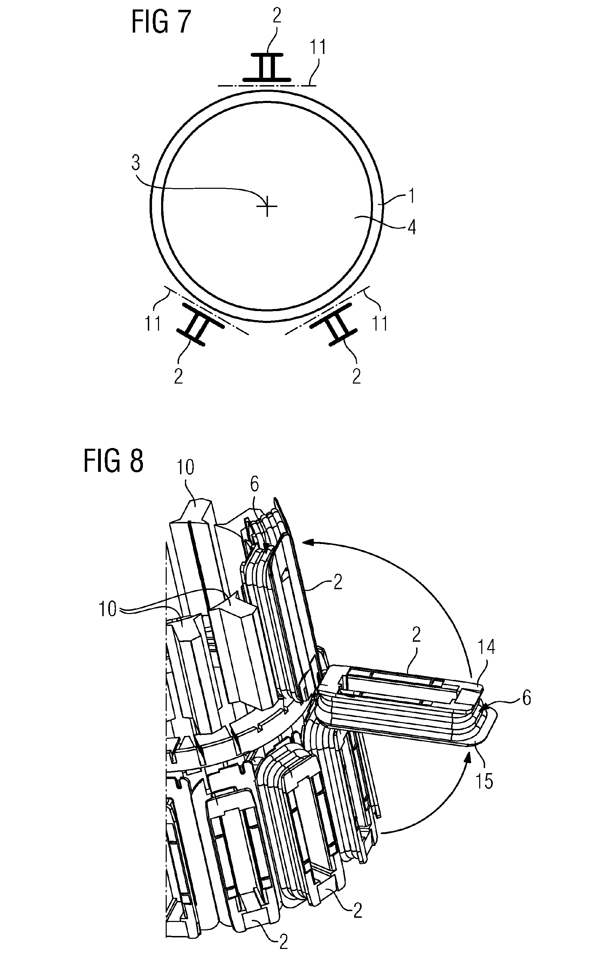

Die so hergestellte Statorwicklung, d.h. die Gesamtheit der Spulen 6, soll in einen Stator 7 (siehe FIG 6 bis 8) eingebracht werden, der eine Verbindungsstruktur 8 aufweist, die in einem radialen Abstand r' von einer Zentralachse 9 des Stators 7 um eine Zentralachse 9 des Stators 7 umläuft. Der Stator 7 weist eine Anzahl von Statorzähnen 10 auf. Die Statorzähne 10 ragen, ausgehend von der Verbindungsstruktur 8, nach radial außen. Zum Aufbringen der Statorwicklung wird das Hilfselement 1 gemäß den FIG 6 bis 8 derart relativ zum Stator 7 angeordnet, dass die Zentralachse 3 des Hilfselements 1 mit der Zentralachse 9 des Stators 7 fluchtet. Die Zentralachse 3 des Hilfselements 1 kann also in diesem Zustand als Fortsetzung der Zentralachse 9 des Stators 7 angesehen werden. Die Spulenträger 2 einschließlich der auf den Spulenträgern 2 angeordneten Spulen 6 - siehe insbesondere FIG 8 - werden in diesem Zustand um eine jeweilige Schwenkachse 11 geschwenkt.

Die jeweilige Schwenkachse 11 ist individuell für den jeweiligen Spulenträger 2 bestimmt. Die Schwenkachsen 11 verlaufen zwar - siehe insbesondere die FIG 6 und 7 - für alle Spulenträger 2 im Bereich des Schaltungsträgers 4. Die jeweilige Schwenkachse 11 verläuft jedoch, bezogen auf den jeweiligen Spulenträger 2, im Bereich des jeweiligen Spulenträgers 2 tangential zu den Zentralachsen 3, 9. In FIG 7 ist - rein beispielhaft - für einige der Spulenträger 2 die jeweilige Schwenkachse 11 eingezeichnet.

Durch das Verschwenken der Spulenträger 2 werden - siehe erneut FIG 8 - die mit den Spulen 6 versehenen Spulenträger 2 von radial außen auf jeweils einen der Statorzähne 10 aufgeschwenkt. Nach dem Aufschwenken der Spulenträger 2 auf die Statorzähne 10 sind somit die Spulenträger 2 auf den Statorzähnen 10 angeordnet. Analog zur vorherigen Anordnung an dem Hilfselement 1 sind die Spulenträger 2 von der Zentralachse 9 des Stators 7 radial beabstandet. Weiterhin sind sie analog zur vorherigen Anordnung an dem Hilfselement 1 tangential um die Zentralachse 9 des Stators 7 herum gesehen gleichmäßig um die Zentralachse 9 des Stators 7 herum verteilt angeordnet. Insbesondere sind die Spulenträger 2 nach dem Aufschwenken auf Statorzähne 10 in der Regel auf einem Zylindermantel um die Zentralachse 9 des Stators 7 herum angeordnet. Aufgrund der Lage der Schwenkachsen 11 ist weiterhin nach dem Aufschwenken der Spulenträger 2 auf die Statorzähne 10 an einem axialen Ende der Spulenträger 2 der Schaltungsträger 4 angeordnet.

Es ist möglich, dass das Hilfselement 1 mit den am Hilfselement 1 angeordneten Spulenträgern 2 und dem am Hilfselement 1 angeordneten Schaltungsträger 4 erst nach dem Bewickeln der Spulenträger 2 derart positioniert wird, dass die Zentralachse 3 des Hilfselements 1 mit der Zentralachse 9 des Stators 7 fluchtet. Alternativ ist es möglich, dass das Hilfselement 1 bereits vor dem Bewickeln der Spulenträger 2 entsprechend positioniert wird.

Durch das Herstellungsverfahren für die Statorwicklung (d.h. die Gesamtheit der Spulen 6) wird somit erreicht, dass zwar - wie im Stand der Technik auch - auf die Spulenträger 2 jeweils ein Leiterdraht 5 gewickelt ist, so dass der auf den Spulenträger 2 gewickelte Leiterdraht 5 eine Spule 6 der Statorwicklung des Stators 7 bildet. Im Unterschied zum Stand der Technik ist aufgrund des Herstellungsverfahrens jedoch für jede Phase a bis c der jeweilige Leiterdraht 5a bis 5c über den Schaltungsträger 4 jeweils von Spulenträger 2 zu Spulenträger 2 der jeweiligen Phase a bis c geführt. Ein verbinden von Leiterenden der Leiterdrähte 5a bis 5c im Schaltungsträger 4 ist nicht mehr erforderlich.

Im Rahmen der obenstehend in Verbindung mit den FIG 6 bis 8 erläuterten Vorgehensweise werden die Spulenträger 2 zum Aufschwenken auf die Statorzähne 10 um 180° um die jeweilige Schwenkachse 11 verschwenkt. Es ist jedoch bei entsprechender Ausgestaltung des Hilfselements 1 ebenso möglich, dass der Schwenkwinkel kleiner als 180° ist. Insbesondere liegt der Schwenkwinkel bei einer Ausgestaltung des Hilfselements 1 gemäß FIG 4 zwischen 90° und 180°. Beispielsweise kann er bei 150°, 135° oder 120° liegen. Bei der Ausgestaltung von FIG 5 liegt der Schwenkwinkel bei 90°. Dieser Wert sollte vorzugsweise nicht unterschritten werden.

Nachfolgend werden Ausgestaltungen der obenstehend in Verbindung mit den FIG 1 bis 8 erläuterten prinzipiellen Vorgehensweise der vorliegenden Erfindung näher erläutert. Die Ausgestaltungen sind nach Bedarf miteinander kombinierbar.

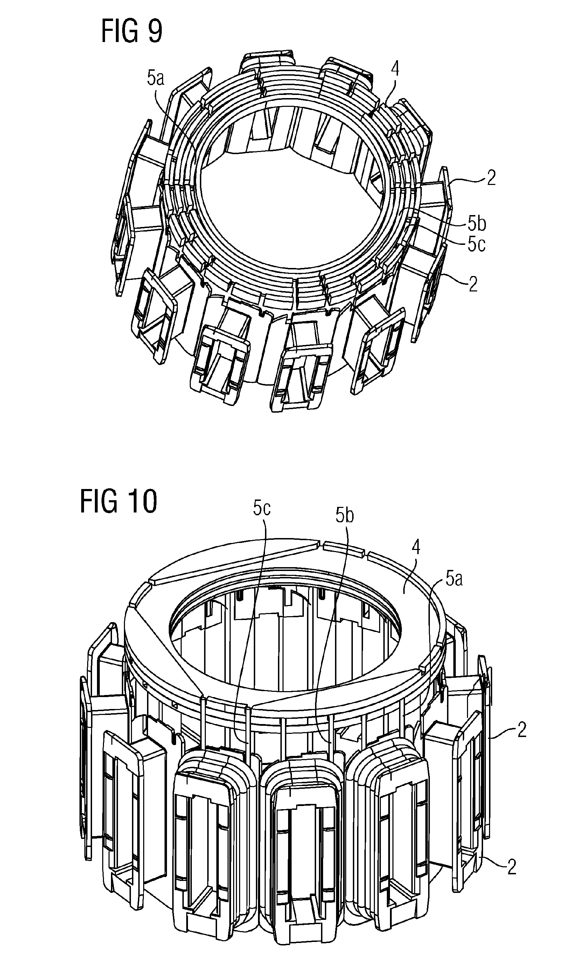

Innerhalb des Schaltungsträgers 4 werden die Leiterdrähte 5a bis 5c der Phasen a bis c vorzugsweise kreuzungsfrei geführt. Hierzu ist es beispielsweise gemäß FIG 9 möglich, dass die Leiterdrähte 5a bis 5c der Phasen a bis c im Schaltungsträger 4 von Phase a bis c zu Phase a bis c radial versetzt geführt werden. Eine Phase (beispielsweise die Phase a) wird also radial außen geführt, eine weitere Phase (beispielsweise die Phase b) radial mittig und eine weitere Phase (beispielsweise die Phase c) radial innen. Alternativ zu einer radial versetzten Führung der Leiterdrähte 5a bis 5c im Schaltungsträger 4 ist es gemäß FIG 10 möglich, dass die Leiterdrähte 5a bis 5c der Phasen a bis c im Schaltungsträger 4 von Phase a bis c zu Phase a bis c axial versetzt geführt werden.

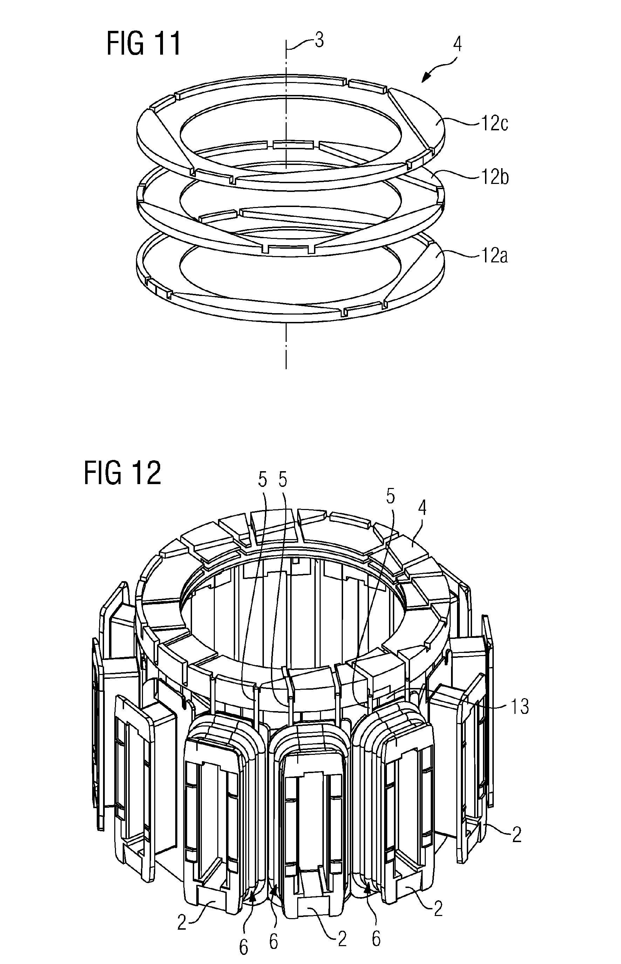

Im letztgenannten Fall - also der axial versetzten Führung - kann insbesondere der Schaltungsträger 4 pro Phase a bis c gemäß FIG 11 jeweils einen Teilträger 12a bis 12c aufweisen. In diesem Fall wird im Rahmen der Herstellung der Statorwicklung zunächst nur einer der Teilträger - beispielsweise der Teilträger 12a - an dem Hilfselement 1 angeordnet. Sodann werden die Spulenträger 2a der entsprechenden Phase a bewickelt. Danach wird der nächste Teilträger 12b auf den Teilträger 12b aufgesetzt, und es werden die Spulenträger 2b der nächsten Phase b bewickelt. Danach wird der nächste Teilträger 12c auf den Teilträger 12b aufgesetzt, und es werden die Spulenträger 2c der nächsten Phase c bewickelt. Nach dem Aufschwenken der Spulenträger 2 auf die Statorzähne 10 sind dadurch die Teilträger 12a bis 12c in Richtung der Zentralachse 9 des Stators 7 gesehen aufeinander gestapelt.

Im einfachsten Fall besteht vor dem Bewickeln der Spulenträger 2 mit den Leiterdrähten 5 keine direkte Verbindung der Spulenträger 2 mit dem Schaltungsträger 4. Alternativ ist es möglich, dass die Spulenträger 2 gemäß FIG 12 jeweils ein Scharnier 13 aufweisen. In diesem Fall sind die Spulenträger 2 über das jeweilige Scharnier 13 jeweils mit dem Schaltungsträger 4 verbunden. Dies gilt zumindest im Rahmen der Herstellung der Statorwicklung, während also die Spulenträger 2 an dem Hilfselement 1 angeordnet sind. Vorzugsweise gilt es auch für die fertige Statorwicklung, wenn also die Spulenträger 2 auf die Statorzähne 10 aufgeschwenkt sind.

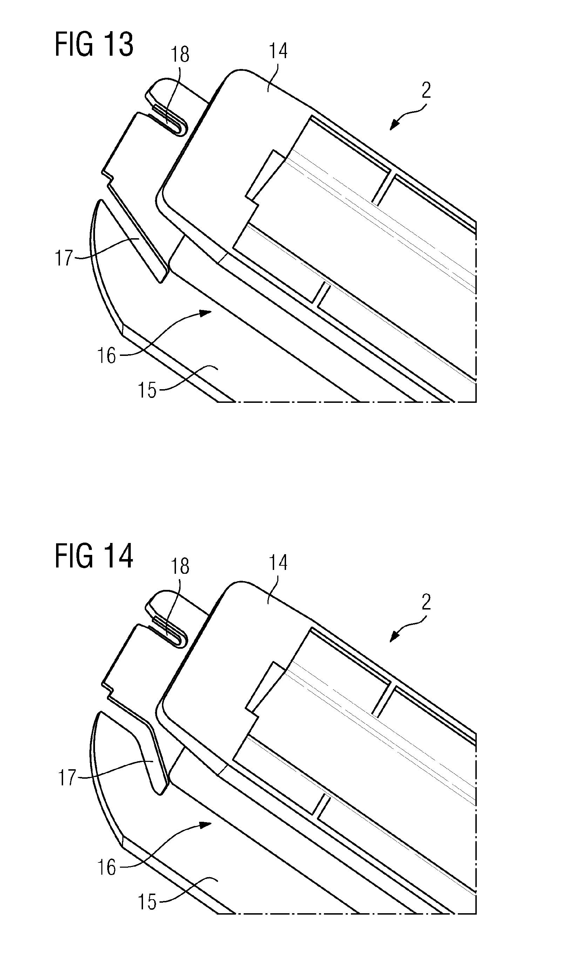

Die Spulenträger 2 - siehe die FIG 13 und 14 für einen einzelnen Spulenträger 2 - weisen in der Regel jeweils einen ersten Spulenträgerflansch 14 und einen zweiten Spulenträgerflansch 15 auf. Im auf einen der Statorzähne 10 aufgeschwenkten Zustand ist der jeweilige erste Spulenträgerflansch 14 der Verbindungsstruktur 8 zugewandt. Der jeweilige zweite Spulenträgerflansch 15 ist von der Verbindungsstruktur 8 abgewandt. Im an dem Hilfselement 1 angeordneten Zustand ist der jeweilige zweite Spulenträgerflansch 15 dem Hilfselement 1 zugewandt, der jeweilige erste Spulenträgerflansch 14 vom Hilfselement 1 abgewandt. Die Spulenträgerflansche 14, 15 begrenzen einen Wickelbereich 16 des jeweiligen Spulenträgers 2. In der Regel ist entsprechend der Darstellung der FIG 13 und 14 der erste Spulenträgerflansch 14 kleiner als der zweite Spulenträgerflansch 15.

Der zweite Spulenträgerflansch 15 weist gemäß den FIG 13 und 14 eine Einführnut 17 und eine Ausführnut 18 auf. Über die Einführnut 17 wird im Rahmen der Herstellung der Statorwicklung vor dem Bewickeln des jeweiligen Spulenträgers 2 der jeweilige Leiterdraht 5 in den Wickelbereich 16 des jeweiligen Spulenträgers 2 eingeführt. Über die Ausführnut 18 wird der jeweilige Leiterdraht 5 nach dem Bewickeln des jeweiligen Spulenträgers 2 aus dem Wickelbereich 16 des jeweiligen Spulenträgers 2 ausgeführt.

Zumindest die Einführnut 17 weist - bezogen auf eine Haupterstreckungsrichtung des jeweiligen Spulenträgers 2 - gemäß den FIG 13 und 14 einen nicht völlig geraden Verlauf auf. Gemäß FIG 13 verläuft die Einführnut 17 schräg zur Haupterstreckungsrichtung. Gemäß FIG 14 weist die Einführnut 17 mindestens zwei Abschnitte auf, wobei mindestens einer der Abschnitte nicht parallel zur Haupterstreckungsrichtung des jeweiligen Spulenträgers 2 verläuft. Im auf die Statorzähne 10 aufgeschwenkten Zustand verlaufen die Einführnuten 17 dadurch nicht rein axial zur Zentralachse 9 des Stators 7, sondern weisen zumindest in einem Abschnitt eine Tangentialkomponente auf.

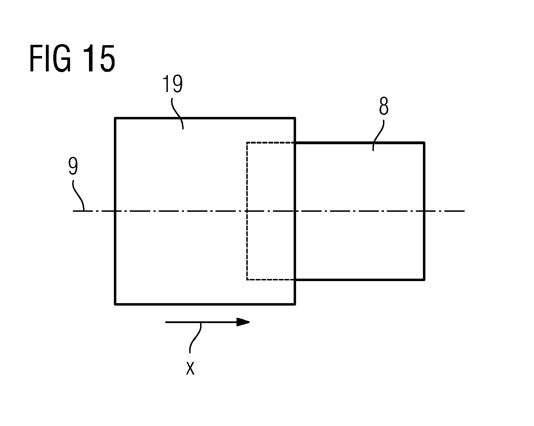

Die vorliegende Erfindung wird vorzugsweise in Verbindung mit einem als Stern-Joch-Paket ausgebildeten Stator 7 verwendet. In diesem Fall wird der Stern durch die Verbindungsstruktur 8 und die von der Verbindungsstruktur 8 nach radial außen ragenden Statorzähne 10 gebildet. Bei einer derartigen Ausgestaltung des Stators 7 wird gemäß FIG 15 nach dem Aufschwenken der mit den Spulen 6 versehenen Spulenträger 2 auf die Statorzähne 10 axial zur Zentralachse 9 des Stators 7 ein Statorjoch 19 auf die Statorzähne 10 aufgeschoben. Eine Aufschieberichtung x ist also parallel zur Zentralachse 9 des Stators 7 gerichtet. Dadurch werden zum einen die Spulenträger 2 unverlierbar fixiert, zum anderen wird dadurch der magnetische Rückschluss vervollständigt.

Die vorliegende Erfindung weist viele Vorteile auf. Insbesondere ist es möglich, die Spulen 6 pro Phase a bis c mittels eines jeweiligen durchgehenden Leiterdrahtes 5a bis 5c zu wickeln. Aufgrund des Verlaufs der Einführnuten 17 kann es nicht geschehen, dass beim Aufschwenken der Spulenträger 2 auf die Statorzähne 10 der Leiterdraht 5 unmittelbar an den Windungen der jeweiligen Spule 6 zu liegen kommt. Dadurch wird insbesondere die Einhaltung von Luft- und Kriechstrecken verbessert.

Zusammengefasst werden also an einem Hilfselement 1 Spulenträger 2 angeordnet, so dass sie von einer Zentralachse 3 des Hilfselements 1 radial beabstandet sind und tangential dazu gleichmäßig verteilt angeordnet sind. Radial innerhalb der Spulenträger 2 wird an dem Hilfselement 1 ein Schaltungsträger 4 angeordnet. Für die Phasen a bis c der Statorwicklung werden Leiterdrähte 5a bis 5c auf den Phasen a bis c zugeordnete Spulenträger 2a bis 2c gewickelt. Die auf die Spulenträger 2a bis 2c gewickelten Leiterdrähte 5a bis 5c bilden dadurch Spulen 6 der Statorwicklung. Die Leiterdrähte 5a bis 5c werden nach dem Bewickeln jeweils eines Spulenträgers 2a bis 2c über den Schaltungsträger 4 zum jeweils nächsten zu bewickelnden Spulenträger 2a bis 2c der jeweiligen Phase a bis c geführt. Das Hilfselement 1 wird derart relativ zu einem Stator 7 angeordnet, dass die Zentralachse 3 des Hilfselements 1 mit der Zentralachse 9 des Stators 7 fluchtet. Der Stator 7 weist eine Anzahl von Statorzähnen 10 auf, die, ausgehend von einer in einem radialen Abstand r' von einer Zentralachse 9 des Stators 7 um diese umlaufenden Verbindungsstruktur 8, nach radial außen ragen. Die mit den Spulen 6 versehenen Spulenträger 2 werden um eine im Bereich des Schaltungsträgers 4 tangential zu den Zentralachsen 3, 9 verlaufende jeweilige Schwenkachse 11 geschwenkt. Dadurch werden die mit den Spulen 6 versehenen Spulenträger 2 von radial außen auf jeweils einen der Statorzähne 10 aufgeschwenkt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für eine Statorwicklung eines Stators (7), der eine Anzahl von Statorzähnen (10) aufweist, die, ausgehend von einer in einem radialen Abstand (r') von einer Zentralachse (9) des Stators (7) um die Zentralachse (9) des Stators (7) umlaufenden Verbindungsstruktur (8), nach radial außen ragen,
- wobei an einem Hilfselement (1) Spulenträger (2) angeordnet werden, so dass die Spulenträger (2) von einer Zentralachse (3) des Hilfselements (1) radial beabstandet sind und tangential um die Zentralachse (3) des Hilfselements (1) herum gesehen gleichmäßig um die Zentralachse (3) des Hilfselements (1) herum verteilt angeordnet sind,
- wobei an dem Hilfselement (1) radial innerhalb der Spulenträger (2) ein Schaltungsträger (4) angeordnet wird,
- wobei für jede Phase (a bis c) der Statorwicklung ein jeweiliger Leiterdraht (5a bis 5c) auf der jeweiligen Phase (a bis c) zugeordnete Spulenträger (2a bis 2c) gewickelt wird, so dass der auf die jeweiligen Spulenträger (2a bis 2c) gewickelte jeweilige Leiterdraht (5a bis 5c) jeweilige Spulen (6) der Statorwicklung bildet,
- wobei der jeweilige Leiterdraht (5a bis 5c) nach dem Bewickeln jeweils eines der Spulenträger (2a bis 2c) über den Schaltungsträger (4) zum jeweils nächsten zu bewickelnden Spulenträger (2a bis 2c) der jeweiligen Phase (a bis c) geführt wird und
- wobei das Hilfselement (1) derart relativ zum Stator (7) angeordnet wird, dass die Zentralachse (3) des Hilfselements (1) mit der Zentralachse (9) des Stators (7) fluchtet, und sodann die mit den Spulen (6) versehenen Spulenträger (2) um eine im Bereich des Schaltungsträgers (4) tangential zu den Zentralachsen (3, 9) verlaufende jeweilige Schwenkachse (11) geschwenkt werden, so dass die mit den Spulen (6) versehenen Spulenträger (2) von radial außen auf jeweils einen der Statorzähne (10) aufgeschwenkt werden.

2. Herstellungsverfahren nach Anspruch 1, **dadurch gekennzeichnet, dass** die Spulenträger (2) zum Aufschwenken auf die Statorzähne (10) um mindestens 90° um die jeweilige Schwenkachse (11) verschwenkt werden.

3. Herstellungsverfahren nach Anspruch 2, **dadurch gekennzeichnet, dass** die Spulenträger (2) zum Aufschwenken auf die Statorzähne (10) um 180° um die jeweilige Schwenkachse (11) verschwenkt werden.

4. Herstellungsverfahren nach Anspruch 1, 2 oder 3, **da**- **durch gekennzeichnet**, dass die Leiterdrähte (5a bis 5c) der Phasen (a bis c) im Schaltungsträger (4) von Phase (a bis c) zu Phase (a bis c) radial versetzt geführt werden.

5. Herstellungsverfahren nach Anspruch 1, 2 oder 3, **da**- **durch gekennzeichnet**, dass die Leiterdrähte (5a bis 5c) der Phasen (a bis c) im Schaltungsträger (4) von Phase (a bis c) zu Phase (a bis c) axial versetzt geführt werden.

6. Herstellungsverfahren nach Anspruch 5, **dadurch gekennzeichnet, dass** der Schaltungsträger (4) pro Phase (a bis c) jeweils einen Teilträger (12a bis 12c) aufweist, dass zunächst einer der Teilträger (12a bis 12c) an dem Hilfselement (1) angeordnet wird und dass der jeweils nächste Teilträger (12a bis 12c) erst nach dem Wickeln des Leiterdrahtes (5a bis 5c) zu den Spulen (6) der jeweiligen Phase (a bis c) auf den jeweils vorhergehenden Teilträger (12a bis 12c) aufgesetzt wird.

7. Herstellungsverfahren nach einem der obigen Ansprüche, **dadurch gekennzeichnet, dass** die Spulenträger (2) jeweils ein Scharnier (13) aufweisen, über das sie jeweils mit dem Schaltungsträger (4) verbunden sind.

8. Herstellungsverfahren nach einem der obigen Ansprüche, **dadurch gekennzeichnet, dass** die Spulenträger (2) jeweils einen ersten und einen zweiten Spulenträgerflansch (14, 15) aufweisen, dass im auf die Statorzähne (10) aufgeschwenkten Zustand der erste Spulenträgerflansch (14) der Verbindungsstruktur (8) zugewandt und der zweite Spulenträgerflansch (15) von der Verbindungsstruktur (8) abgewandt ist, dass der zweite Spulenträgerflansch (15) eine Einführnut (17) zum Einführen des Leiterdrahtes (5) in einen von den Spulenträgerflanschen (14, 15) begrenzten Wickelbereich (16) des jeweiligen Spulenträgers (2) aufweist und dass die Einführnut (17) im auf die Statorzähne (10) aufgeschwenkten Zustand nicht rein axial zur Zentralachse (9) des Stators (7) verläuft, sondern zumindest in einem Abschnitt eine Tangentialkomponente aufweist.

9. Herstellungsverfahren nach Anspruch 8, **dadurch gekennzeichnet, dass** der erste Spulenträgerflansch (14) kleiner ist als der zweite Spulenträgerflansch (15).

10. Herstellungsverfahren nach einem der obigen Ansprüche, **dadurch gekennzeichnet, dass** nach dem Aufschwenken der mit den Spulen (6) versehenen Spulenträger (2) auf die Statorzähne (10) axial zur Zentralachse (9) des Stators (7) ein Statorjoch (19) auf die Statorzähne (10) aufgeschoben wird.

11. Stator,
- wobei der Stator eine Anzahl von Statorzähnen (10) aufweist, die, ausgehend von einer in einem radialen Abstand (r') von einer Zentralachse (9) des Stators um die Zentralachse (9) umlaufenden Verbindungsstruktur (8), nach radial außen ragen,
- wobei auf den Statorzähnen (10) Spulenträger (2) angeordnet sind, so dass die Spulenträger (2) von der Zentralachse (9) des Stators radial beabstandet sind und tangential um die Zentralachse (9) des Stators herum gesehen gleichmäßig um die Zentralachse (9) des Stators herum verteilt angeordnet sind,
- wobei an einem axialen Ende der Spulenträger (2) ein Schaltungsträger (4) angeordnet ist,
- wobei auf die Spulenträger (2) jeweils ein Leiterdraht (5) gewickelt ist, so dass der auf den Spulenträger (2) gewickelte Leiterdraht (5) eine Spule (6) einer Statorwicklung des Stators bildet,
- wobei für jede Phase (a bis c) der Leiterdraht (5a bis 5c) über den Schaltungsträger (4) jeweils von Spulenträger (2a bis 2c) zu Spulenträger (2a bis 2c) der jeweiligen Phase (a bis c) geführt ist.

12. Stator nach Anspruch 11, **dadurch gekenn**- **zeichnet**, dass die Leiterdrähte (5a bis 5c) der Phasen (a bis c) im Schaltungsträger (4) von Phase (a bis c) zu Phase (a bis c) radial versetzt geführt sind.

13. Stator nach Anspruch 11, **dadurch gekenn**- **zeichnet**, dass die Leiterdrähte (5a bis 5c) der Phasen (a bis c) im Schaltungsträger (4) von Phase (a bis c) zu Phase (a bis c) axial versetzt geführt sind.

14. Stator nach Anspruch 13, **dadurch gekenn**- **zeichnet**, dass der Schaltungsträger (4) pro Phase (a bis c) jeweils einen Teilträger (12a bis 12c) aufweist und dass die Teilträger (12a bis 12c) in Richtung der Zentralachse (9) des Stators gesehen aufeinander gestapelt sind.

15. Stator nach einem der Ansprüche 11 bis 14, **dadurch gekennzeichnet, dass** die Spulenträger (2) jeweils ein Scharnier (13) aufweisen, über das sie jeweils mit dem Schaltungsträger (4) verbunden sind.

16. Stator nach einem der Ansprüche 11 bis 15, **dadurch gekennzeichnet, dass** die Spulenträger (2) jeweils einen ersten und einen zweiten Spulenträgerflansch (14, 15) aufweisen, dass der erste Spulenträgerflansch (14) der Verbindungsstruktur (8) zugewandt und der zweite Spulenträgerflansch (15) von der Verbindungsstruktur (8) abgewandt ist, dass der zweite Spulenträgerflansch (15) eine Einführnut (17) aufweist, über die der Leiterdraht (5) in einen von den Spulenträgerflanschen (14, 15) begrenzten Wickelbereich (16) des jeweiligen Spulenträgers (2) eingeführt ist, und dass die Einführnut (17) nicht rein axial verläuft, sondern zumindest in einem Abschnitt eine Tangentialkomponente aufweist.

17. Stator nach Anspruch 16, **dadurch gekenn**- **zeichnet**, dass der erste Spulenträgerflansch (14) kleiner ist als der zweite Spulenträgerflansch (15).

18. Stator nach einem der Ansprüche 11 bis 17, **dadurch gekennzeichnet, dass** auf die Statorzähne (10) ein Statorjoch (19) aufgeschoben ist.
